# EUROPEAN PATENT SPECIFICATION

(11) **EP 4 211 831 B1**
(45) Date of publication and mention of the grant of the patent: **02.07.2025**
(21) Application number: 20772050.9
(22) Date of filing: 14.09.2020
(51) Int. Cl.: H04L 65/4061, H04L 67/306, H04L 67/51, H04L 67/55

(54) **PRIMARY AND VISITED MISSION CRITICAL SERVICE SERVERS**
PRIMÄRE UND BESUCHTE UNTERNEHMENSKRITISCHE SERVICESERVER
SERVEURS PRIMAIRES ET VISITÉS DE SERVICE CRITIQUES DE MISSION

(43) Date of publication of application: 19.07.2023
(73) Proprietor: Nokia Technologies Oy, 02610 Espoo (FI)
(72) Inventor: ZSIGMOND, Gabor, 1121 Budapest (HU); ZABO, Szabolcs, 1196 Budapest (HU); KLÖCKER, Michael, 82256 Fürstenfeldbruck (DE)
(74) Representative: Mudge, Kevin
(86) International application number: PCT/EP2020/075622
(87) International publication number: WO 2022/053159

(56) References cited:
- "3rd Generation Partnership Project; Technical Specification Group Services and System Aspects; Common functional architecture to support mission critical services; Stage 2 (Release 17)", vol. SA WG6, no. V17.3.0, 6 July 2020 (2020-07-06), pages 1 - 267, XP051924148, Retrieved from the Internet <URL:ftp://ftp.3gpp.org/Specs/archive/23_series/23.280/23280-h30.zip 23280-h30.doc> [retrieved on 20200706]

## Description

### Field

The present application relates to a primary mission critical service server and a visited mission critical service server for supporting so-called mission critical services.

### Background

A communication system can be seen as a facility that enables communication sessions between two or more entities. A communication system can be provided for example by means of a communication network and one or more compatible communication devices.

In a wireless communication system at least a part of a communication session between at least two entities occurs over a wireless link. Examples of wireless systems comprise public land mobile networks (PLMN), satellite-based communication systems and different wireless local networks, for example wireless local area networks (WLAN).

The communication system and associated entities typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks.

3GPP TS 23.280 V17.3.0 (2020-07) 'Common functional architecture to support mission critical services' (Stage 2, release 17) discloses at section 10.1.4.3.2 'Mission Critical (MC) service user receiving MC service from a partner MC system' an arrangement where a partner system acts as a proxy for a primary MC system.

### Summary

According to the present invention, there is provided a primary mission critical service server, a visited mission critical service server serving the user client and a corresponding system as claimed in the accompanying claims.

### Brief description of Figures

Some embodiments will now be described in further detail, by way of example only, with reference to the following examples and accompanying drawings, in which:
Figure 1 shows a schematic representation of a part of a part of a network supporting mission critical services;
Figure 2 shows a schematic representation of a first example of a signal flow in a network;
Figure 3 shows a schematic representation of a second example of a signal flow in a network;
Figure 4 shows schematic representation of an apparatus according to an example;
Figure 5 shows schematic representation of an apparatus according to an example;
Figure 6 shows a schematic representation of a third example of a signal flow in a network;
Figure 7 shows a schematic representation of a fourth example of a signal flow in a network;
Figure 8 shows a schematic representation of a fifth example of a signal flow in a network;
Figure 9 shows a schematic representation of a sixth example of a signal flow in a network; and
Figure 10 shows a flow chart of a first method; and
Figure 11 shows a flow chart of a second method.

### Detailed description

Some embodiments may relate to so-call mission critical services. These services may be MCPTT (mission critical push to talk), MCData (mission critical data), MCVideo (mission critical video) and/or any other suitable mission critical services.

The 3^{rd} Generation Partnership Project (3GPP) has developed standards for Mission Critical Push To Talk (MCPTT) using Mobile Communication Networks, e.g. Long Term Evolution (LTE)/ Evolved Packet Core (EPC) since Rel-13 (Release 13).

The Mission Critical System used for MCPTT may be included in and adapted to run on certain networks, such as Fifth Generation (5G) networks; 3GPP Rel-15 (Release 15) networks; 3GPP Rel-16 (Release 16) networks; 3GPP Rel-17 (Release 17) networks; etc.

Similar systems to those discussed in the context of the MCPTT standards may be used with in any other suitable system or standard.

MCPTT communication may be used for communications that if disrupted, would significantly impact how a system operates or for public safety communication. Examples of such MCPTT systems are an emergency services communication system or a communication system for public authorities, e.g. the police.

One potential application of MCPTT is for railway traffic. The system developed for mission critical communication may be used as a basis for a railways communication system.

One application being worked on is sometimes referred to as FRMCS (future railway mobile communication system). This may be based on underlying LTE/EPC or 5G infrastructure or any other suitable infrastructure.

The further digitalization and automation of railway traffic, such as automatic train operation (ATO) is being developed.

ATO may require a relatively high communication reliability with a relatively low latency. For example, ATO with a relatively high automation grade (such asGoA3/4) requires a high reliable communication with a low latency. These requirements may be provided by the URLLC (ultra-reliable low latency communication) like performance of the 5G system.

It has been proposed in the discussions relating to FRMCS that p2p and group calls (voice, data and video) be provided by MCX server. An MCX server is a server which provides a mission critical service. The MXC server architecture currently provides shared control and media/user plane functions.

In MCPTT systems, an MCPTT server can be used to establish a connection among MCPTT clients in the system. The MCPTT server can also store addressing information of MCPTT clients and can be used to set up calls between MCPTT clients.

MCPTT clients can be used by users to connect to a MCPTT system. An MCPTT client may comprise: a user equipment (UE); an application operating at a UE; a user device; a computing device; etc.

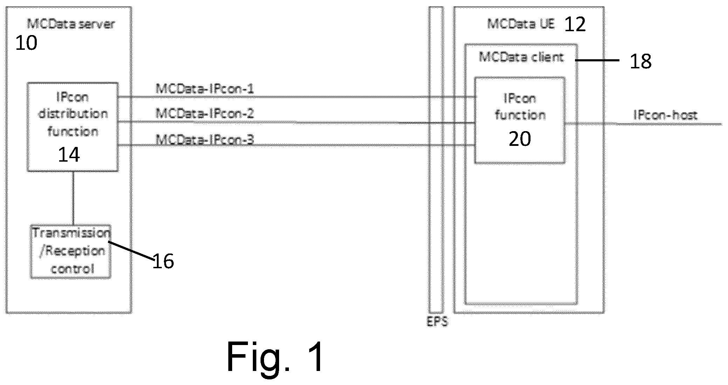

Reference is made to Figure 1 which shows an application plane function model of IP connectivity for a MCData server 10 and a MCData UE (user equipment) 12.

The MCData server 10 comprises an IPcon (internet protocol connectivity) distribution function 14 and a transmission/ reception control function 16.

The MCData UE 12 comprise a MCData client 18 which comprises a IPcon function 20.

Figure 1 shows three reference points between the IPcon function 20 and the IPcon distribution function 14:
MCData-IPcon-1 reference point is used for MCData application signalling for establishing a session in support of MCData IP connectivity;
MCData-IPcon-2 reference point carries bidirectional IP data for point-to-point MCData IP connectivity over a media plane between the U (user plane)-IPcon distribution function of the MCData server and the IPcon function of the MCData client(s); and
MCData-IPcon-3 reference point is used by the IPcon distribution function of the MCData server to send unidirectional downlink IP data to the IPcon function of the MCData clients.

The MC service client may be is the MCData client.

The MC service server may be the MCData server.

The MC service ID may be the MCData ID.

In the arrangement shown in Figure 1, the signalling and media follows the same path with all data passing the MC service server either providing participation role or a hosting role.

With the arrangements such as shown in Figure 1, it is currently proposed that all the MCData clients supporting users belonging to a single group are required to use the same MCData server for that group. An MCData client supporting a user involved in multiple groups can have relationships with multiple MCData servers.

Currently, if a MCData client 1 has a p2p (point to point) connection with another MCData client 2 then the MCData server 1 (hosting MCData client 1) has a connection with MCData server 2 (hosting MCData client 2).

Currently, if an MCData client 1 is affiliated to several MCData groups and if those MCData groups are hosted by more than one MCData server, the MCData client 1 has connections to those MCData servers.

Currently the p2p data media plane is sent to the centralized MC service server.

Some embodiments may be provided where the client can be located relatively far from the associated server. For example, in the context of a railway system, the client and the server may be several hundreds of kilometres apart.

With the centralized MCX server deployment the URLLC may not be achieved in p2p data calls, as data needs to be sent several hundreds of kilometres back and forth.

In some embodiments, one or more MCX servers may be locally deployed. The locally deployed MCX servers may handle the control in a decentralized way. A user will be allocated to a central server. That central server may have all the MC user information for the users allocated to that server and will mirror or otherwise provide the data to the one or more local MCX servers. Thus, a central server can be dedicated on a per MC user basis. There may be a plurality of different central servers, with users being allocated to different ones of the central servers. For example, one central server may be provided for MC users having first home geographic location and another server may be provided for MC users having a second different home location.

In some embodiments, infrastructure managers (e.g. railway companies) may deploy several MC service servers on the edge locations and handle the local MCData calls, MCX p2p and/or group calls using these servers.

In one example, the MC user (for example a train driver or equipment provided on a train) will migrate through several MCX servers during the day as the train travels. The current local MCX server may vary relatively frequently. This may make the MC user profile management or profile update/change more complex for the infrastructure manager as the operator may need to be aware of the MC user location.

When the MC user is migrated to a foreign country (foreign operator) due to e.g. international train traffic, then the MC user profile update in home/primary MCX server will not reach the MC user until (s)he migrates back to the home/primary MCX system. For example, a Functional Alias configuration change will not have effect until the MC user is migrated.

Some embodiment address handling of MC user profile management in a centralized or dedicated MCX server (MC service server) and inform the partner (visited) MCX server about the profile change or profile update promptly after it has happened.

Some embodiments may address the informing of the centralized or dedicated MCX server about any profile change in the partner (visited) MCX server. For example, Functional Alias (FA) management may require the profile in the centralized or dedicated MCX server to be updated. For example, when one or more foreign functional aliases are added to the local MC user profile, these may be updated in the home MCX server. If the centralized or dedicated MCX server is not updated, the foreign FAs would be lost when the MC user migrates back from the visited MCX and those would need to be reconfigured at the next migration.

Some embodiments may be used where there is a group configuration modification. For example, there may be adding or removing of a group to/from a list of groups a user implicitly affiliates to after MCPTT service authorization for the user. This may result in a profile update. Some embodiments may provide for the edge deployment of MCX servers with an easier configuration.

Some embodiments may provide an indication in the MC user profile about migration and the address of partner (visited) MCX server where the MC user is migrated.

Some embodiments may provide an indication in the MC user profile about the home/primary MCX server, which needs to be informed about MC user migration and/or about the MC user profile change in partner MCX server.

Some embodiments may allow FAs (functional alias) to be managed and configured in one dedicated MCX server. An FA comprises an identity that can be used as an identifier for an assignment or task of a user. FAs may be managed by the user.

In some examples, an FA may be used as an identifier to address communication towards a called party. In such examples, procedures are used such that an FA is routable.

In the following, reference is made to MCPTT as an example MC service server. However, it should be appreciated that embodiments may be applied to any mission critical service such as MCPTT, MCData and/or MCVideo. An MCX server is one which can support any one or more MC services.

In some embodiments, a primary MCX server may be provided. The primary MCX server may be the server in which the MC user profile was created. The primary MCX server may be referred to as the home MCX server.

In some embodiments, a visited MCX server may be provided. The visited MCX server may be the server into which the MC user is migrated. The visited MCX server may be referred to as a secondary MCX server.

The MC user may be the MC service user.

Some embodiments may use a decentralized MCX server deployment. Some embodiments may have one or more advantages associated with such a deployment.

In some embodiments, each user is provided with a dedicated primary server. Different users may be associated with different primary servers. In some embodiments, for a given user there is a dedicated primary server which will have all the MC user information and will mirror the data to the local MCX servers. It should be appreciated that the profile of the user remains in its primary MCPTT server even after migration. Thus, in some embodiments, the MC user profile remains in the primary server and that profile is updated after every migration. A given primary server may be associated with a plurality of different users.

In some embodiments, local MCX servers which act as a visited MCX servers may be deployed. This may allow URLLC requirements to be satisfied. This may be a particular issue for a rail application or the like where a train may be moving relatively fast and may need to move from one local MC server to the next. In some embodiments, local MCX servers may located relatively close railway lines.

Some embodiments may deploy a local server which provides communication functionality for a certain geographical area. In some embodiments, depending on the size of the country, tens or even hundreds of local servers may be provided.

In some embodiments, migration of a given user may occur relatively frequently as a train travels between locations.

In some embodiments if an MC user (train driver or apparatus of the train) migrates e.g. 4 times during the journey, then only the last visited MCPTT server may contain the related MC user profile data. The previous three servers may not contain the related MC user profile data. The primary server will throughout the journey contain the related MC user profile data and will be updated to reflect the current local server. In some embodiments, the user profile stored in the primary server may store information on one or more previously used local servers. Thus, the primary MCX server maintains the user profile data even after the user has migrated to a local server. The primary server thus keeps the MC user profile and updates it after every migration.

MC user related information can be distributed dynamically to local MCX servers. A given (non-dedicated) MCX server may contain the MC user profile data only for those MC users who are migrated to that MCX server. Group configuration may dynamically follow the local communication needs, group configuration changes and/or group setup. One or more changes or group set up may be triggered by MC user migration.

Dynamic MCX server deployment may save processing capacity. When the train is not there and/or when the train is moving away, there may be no need for local capacity. Accordingly, in some embodiments, a local MCX server can be switched to stand-by, be decommissioned and/or put in lower power mode.

In some embodiments a local MCX server may be instantiated only when the train approaches the geographical area served by that local MCX server. The local MCX server may need to be operated only during the time while any train is in that area. If there are no trains in the area of the local server, then the local server may be for example put in standby.

In some embodiments, an application which requires a relatively high reliability can be decentralized. This may reduce or even avoid the necessity for a long data connection to one or more centralized application servers.

In some embodiments, a MC user profile may comprise or additionally comprise one or more of the following:
- Home/primary MCPTT server address (in which the profile is controlled)
- Migration status (shows whether the MC user is migrated from the primary MCPTT server)
- Visited MCPTT server address (in which the MC user currently resides)

This information may be provided in one or more fields associated with the user profile.

In some embodiments, at least one of the data of the user profile may be provided by configuration at the MC user creation. The home/ primary MCPTT server address may be filled at MC user creation. The migration status and/or the visited MCPTT server address maybe filled dynamically when the MC user migrates to another (the visited) MCX server.

A user profile may relate to a device and/or to a client provided on the device.

This information may be stored in one of more of the MCPTT server, a configuration management server and a MCPTT user database.

In some embodiments, the presence of a visited MCPTT system or server may indicate a migration. This may avoid the need for a migration status in some embodiments.

In some embodiments, a difference between a primary MCPTT server and a visited MCPTT system or server may indicate a migration. This may avoid the need for a migration status in some embodiments.

During profile creation for a user (a device and/or a client on the device), the primary MCPTT server identity will have with the identity of the MCPTT server in which the profile is created. In some embodiments a MCPTT system may comprise a plurality of primary server serving different users. The primary servers may be provided with a respective ID. The visited MCPTT system may comprise a plurality of MCPTT servers.

After the primary MCPTT server obtains the modified MC service user profile data. This may be a result of a manual configuration change or as a result of a running script. For example, a script may be run to provide a mass profile update in the system. When the MCPTT server obtains the modified MC service user profile data, the primary MCPTT server shall check whether the MC user is in the primary MCPTT server or migrated to a visited MCPTT server. This may be based on one or more of the following information in the profile:
Home/primary MCPTT server address;
Migration status; and
Visited MCPTT server address.

If the MC user is migrated then the primary MCPTT server sends an indication to the visited MCPTT server about the MC user profile update, if the profile is modified during the migration.

It should be appreciated that if the MC user is not migrated from the primary server, then the primary MCPTT server may execute a procedure such as described in 3GPP 23.280 Chapter 10.1.4.4 or the like.

The visited MCPTT server may be informed about the profile changes. In some embodiments, an update MC service user profile data request may be used. Alternatively or additionally a notification for MC service user profile data update procedure may be used.

In some embodiments, if user profile data which is updated at the visited MCPTT server, an indication is sent back to the primary MCPTT server indicating that the MC user profile has been updated at the visited MCPTT server.

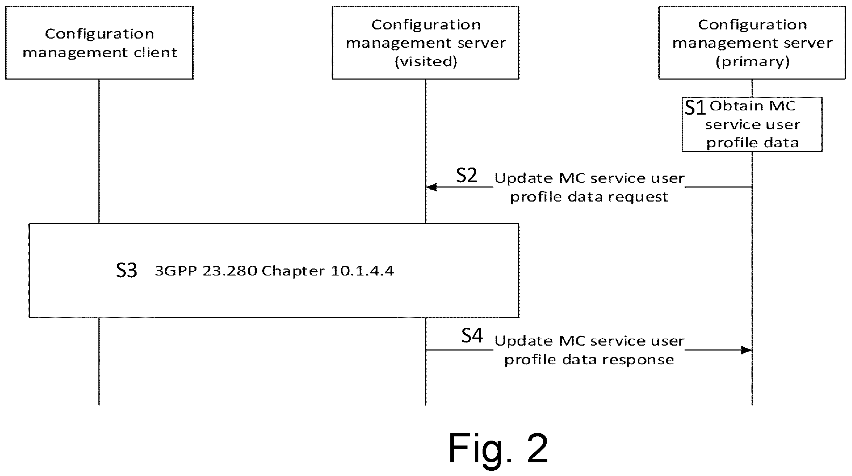

Reference is made to Figure 2 which shows a signal flow where an update MC service profile request is used.

The configuration management server which is the primary MCPTT server in step S1 obtains an update to the MC service user profile data. This may comprise an update to the user profile data. This may be a configuration change managed by a configuration server or any other update to the user profile data. In some embodiments, one or more parameters of the user profile may be updated and/or added to the user profile. One example may be a new Functional Alias is added to the profile by the operator. In some embodiments the migration status and visited MCPTT address is changed during the migration procedure and not via a configuration procedure.

In step S2, the primary MCPTT sends an update MC service user profile data request to the visited MCPTT server (configuration management server (visited). This may comprise at least a part of the user profile data which is required to communicate with the client. This may comprise the updated data only or may comprise a mix of unchanged and changed data of the user profile.

In step S3, visited MCPTT server and the configuration management client (that is the MCPTT client) communicate. This is in accordance with the updated user profile data which is received from the primary MCPTT server. The visited MCPTT server and the MCPTT client may communicate as set out for example in 3GPP 23.280, chapter 10.1.4.4.

In step S4, the visited MCPTT server is configured to send an update MC service user profile data response. This response may comprise information indicating that the procedure is successfully executed in visited MCPTT server. In some embodiments, this may be optional.

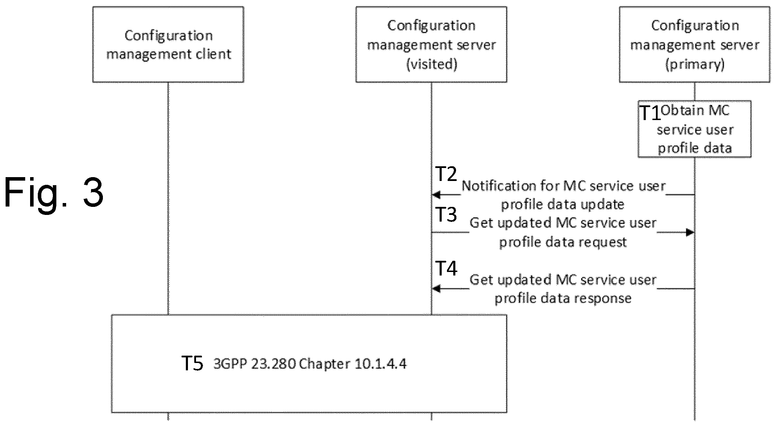

Reference is made to Figure 3 which shows a signal flow where a notification for a MC service user profile data update-based approach is used.

The configuration management server which is the primary MCPTT server in step T1 obtains an update to MC service user profile data. This may comprise an updated user profile data such as described previously.

In step T2, the primary MCPTT sends a notification for MC service user profile data update to the visited MCPTT server (configuration management server (visited). This is to indicate that the user profile data is updated.

In step T3, the visited MCPTT server is configured to send a get updated MC service user profile data request to the primary MCPTT. This is to request at least a part of the updated user profile data.

In step T4, the visited MCPTT server is configured to receive, from the primary MCPTT server, a get updated MC service user profile data response. This provides at least a part of the required user profile data. This may comprise the updated data only or may comprise a mix of unchanged and changed data of the user profile.

In step T5, the visited MCPTT server and the configuration management client (that is the MCPTT client) communicate. This is in accordance with the updated user profile data which is received from the primary MCPTT server. The visited MCPTT server and the MCPTT client may communicate as set out for example in 3GPP 23.280, chapter 10.1.4.4.

In some embodiments, any MC user migration to a visited MCPTT server needs to be updated in the MC user profile stored in the primary MCPTT server. If migration happens between two visited MCPTT servers, then the new MCPTT server shall send an indication to the primary MCPTT server (primary MCPTT server identity is stored in the MC user profile) with the address of the new visited MCPTT server. The primary MCPTT server may update this information in the MC user profile stored in the primary MCPTT server MCPTT user database.

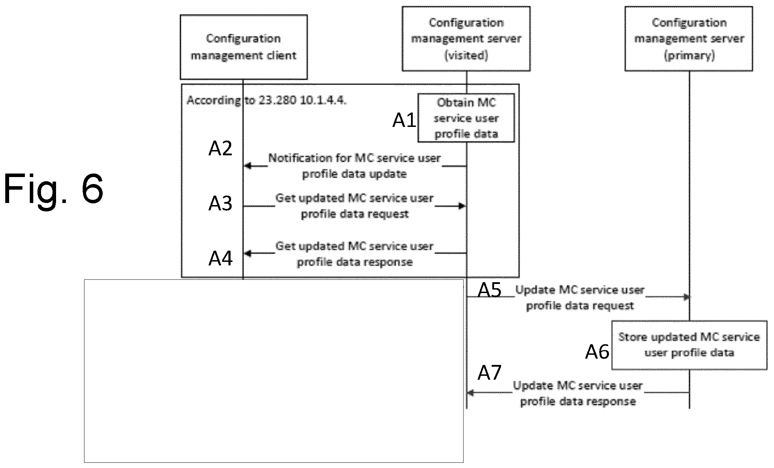

Reference is made to Figure 6 which shows a signal flow where an update MC service profile request is used where an update has occurred in a visited MCPTT server.

The configuration management server which is in the visited MCPTT server in step A1 obtains MC service user profile data for a user. This may be from a manual or script related configuration change in visited MCPTT server. In step A2, the visited configuration management server sends to the configuration management client which is in the MCPTT client application on the UE or the like a notification for a MC service profile data update.

In step A3, the configuration management client sends a get updated MC service user profile data request to the visited configuration management server.

In step A4, the visited configuration management server sends a get updated MC service user profile data response to the configuration management client.

Steps A1 to A4 may be as described in 3GPP 23.280 (10.1.4.4) or be any other suitable steps.

If the migration status parameter is set, for example to TRUE, then the configuration management server in the partner or visited MC server may send the update MC service user profile data request to the configuration management server of the primary MC system of the MC service user to cause the primary MC server to store the modified MC service user profile. This is shown in the following steps.

In step A5, the visited configuration management server sends an update MC service user profile data request to the primary configuration management MCPTT server.

In step A6, the primary MCPTT server stores the updated MC service user profile data.

In step A7, the primary MCPTT server sends an update MC service user profile data response to the visited configuration management server.

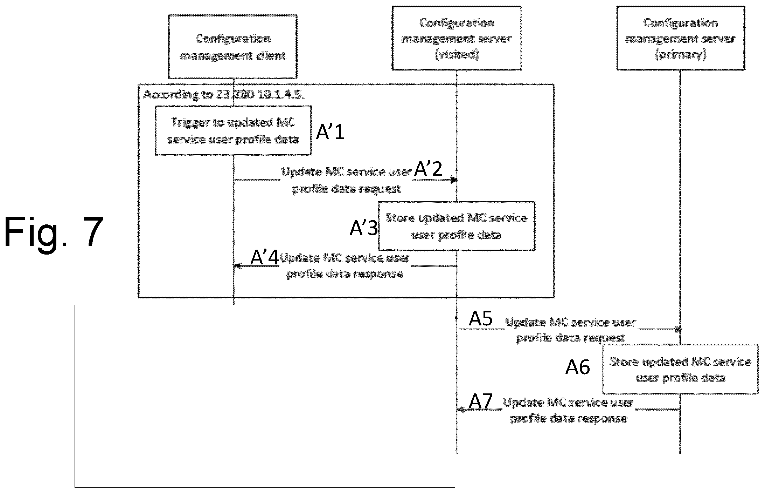

Reference is made to Figure 7 which shows another signal flow where an update MC service profile request is used where an update has occurred in a visited MCPTT server.

In the configuration management client, in step A'1, there is a trigger for updated MC service user profile data for a user.

In step A'2, the configuration management client sends an update MC service user profile request visited configuration management server.

In step A'3, the visited configuration management server stores the updated MC service user profile data.

In step A'4, the visited configuration management server sends an updated MC service user profile data response to the configuration management client.

Steps A'1 to A'4 may be as described in 3GPP 23.280 (10.1.4.5) or be any other suitable steps.

Steps A5 to A7 may be as described in relation to Figure 6.

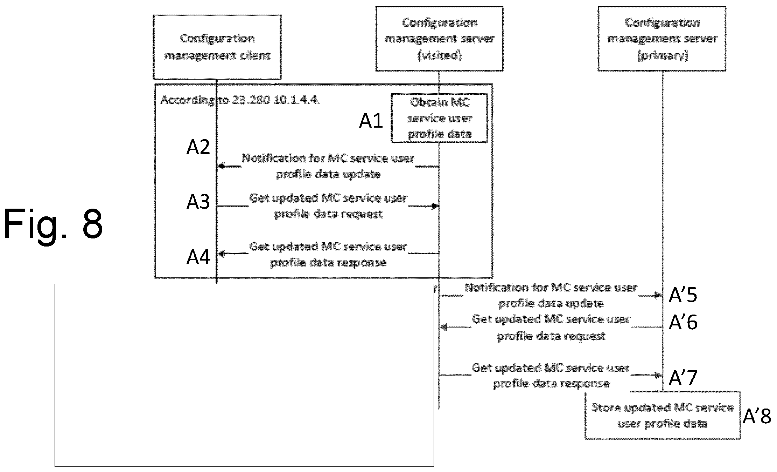

Reference is made to Figure 8 which shows a signal flow where a notification for a MC service user profile data update-based approach is used where an update has occurred in a visited MCPTT server.

Steps A1 to A4 may be as described in relation to Figure 6.

If the migration status parameter is set, for example to TRUE, then the configuration management server in the partner or visited MC server may use a notification procedure to cause the management server of the primary MC system to get the modified MC service user profile data and to cause the primary MC server to store the modified MC service user profile. This is shown in the following steps.

In step A'5, the visited MCPTT sends a notification for MC service user profile data update to the primary MCPTT server.

In step A'6, the primary MCPTT server is configured to send a get updated MC service user profile data request to the visited MCPTT.

In step A'7, the primary MCPTT server is configured to receive, from the visited MCPTT server, a get updated MC service user profile data response with the updated user profile data.

In step A'8, the primary MCPTT server stores the updated MC service user profile data.

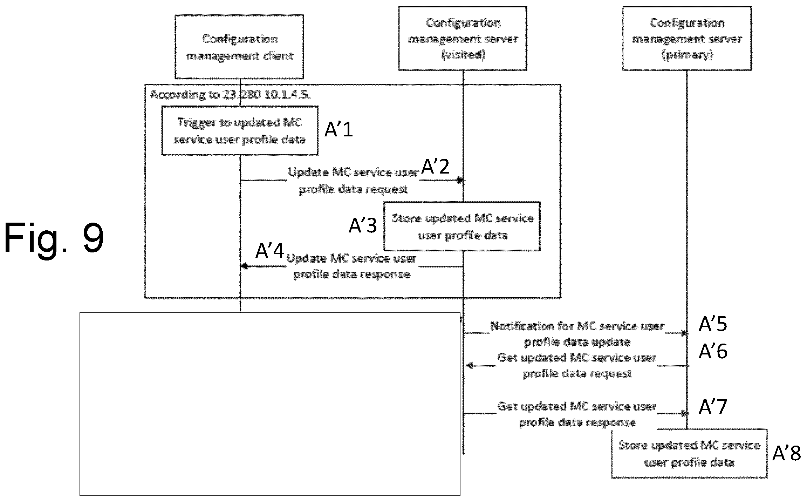

Reference is made to Figure 9 which shows a signal flow where a notification for a MC service user profile data update-based approach is used where an update has occurred in a visited MCPTT server.

Steps A'1 to A'4 may be as described in relation to Figure 7.

Steps A'5 to A'8 may be as described in relation to Figure 8.

In some embodiments, a subscribe-notify based approach may be provided.

Some embodiments use a subscribe-notify based solution to inform the visited MC server about the MC user profile update in primary MC server (during MC user migration. In this case the visited MCX server may subscribe to the MC user profile change at the primary MCX after the MC user is migrated into the visited MCX server.

If the MC user profile is changed/updated in the primary MCX server, then the primary MCX server shall send a notification about this event to all the visited MCX servers, which have subscribed for that particular MC user's profile change event.

The notification may comprise the modified MC user profile. Alternatively, the notification may trigger a get updated MC service user 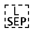 profile data request as discussed previously.

If the MC user profile is changed/updated in the visited MCX server, then the visited MCX server may send a notification about this event to primary MCX server, which has subscribed for that particular MC user's profile change event or for any change to the MC user's profile.

The notification may comprise the modified MC user profile or the modification to the profile. Alternatively, the notification may trigger a get updated MC service user profile data request such as discussed previously.

It should be noted that whilst some of the embodiments, have been described in the context of a MCPTT system, embodiments may be alternatively or additionally used with any other MC system and/or service.

In some embodiments, there may be communication between a visited MCX server and primary MCX server. In some embodiments a primary MCX server is provided with a configuration server. The configuration server may be a logical entity within the server. In some embodiments a visited MCX server is provided with a configuration server. The configuration server may be a logical entity with the server.

In some embodiments, the user profile may be stored in a primary database which may be provided by the primary MCX server or controlled by the primary MCX server. Some embodiments may be provided in a MCX server product.

Some embodiments have been described in the context of mobile networks for railways communication. It should be appreciated that other embodiments may be provided in the context of any other suitable networks such as for first responders, coast guards and any suitable transport scenarios.

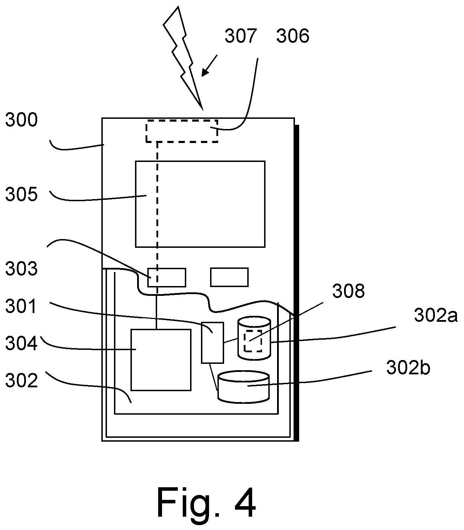

Figure 4 illustrates an example of a terminal 300, such as the UE illustrated in Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 4 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 311a and the ROM 311b. The at least one processor 301 may be configured to execute an appropriate software code 308. The software code 308 may for example allow to perform one or more of the present aspects. The software code 308 may be stored in the ROM 311b. Alternatively or additionally any other suitable type of memory may be used.

The processor, storage and other relevant control apparatus can be provided on an appropriate circuit board and/or in chipsets. This feature is denoted by reference 304.

The device may optionally have a user interface such as keypad 305, touch sensitive screen or pad, combinations thereof or the like. This may be option.

Optionally one or more of a display, a speaker and a microphone may be provided depending on the type of the device.

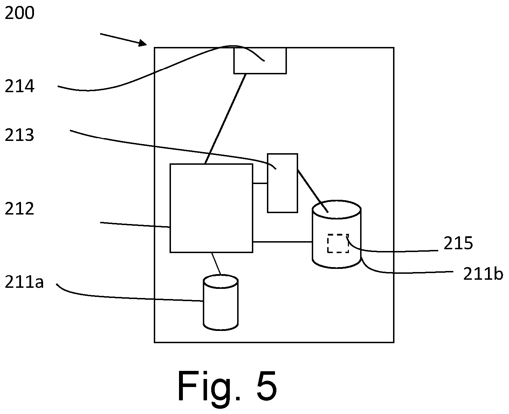

Figure 5 shows an example of a control apparatus which may be provided in one or more of the previously described servers.

The control apparatus 400 comprises at least one memory 401, at least one data processing unit or processor 402, 403 and an input/output interface 404. The control apparatus 400 or processor 401 can be configured to execute an appropriate software code to provide the control functions.

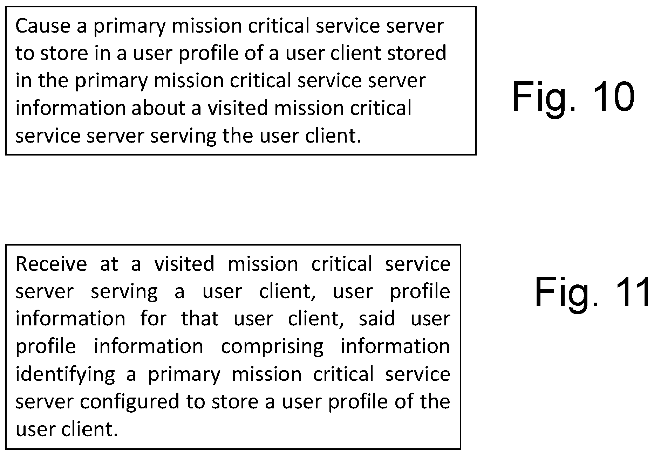

Figure 10 is a flow chart of a method according to an example.

The method may be performed by an apparatus.

The apparatus may comprise at the least processor and at least one memory. The at least one memory may store computer program code.

The apparatus may be as shown in Figure 5.

The apparatus may be in a primary mission critical service server.

The apparatus may be a primary mission critical service server.

The method may comprise causing a primary mission critical service server to store in a user profile of a user client stored in the primary mission critical service server information about a visited mission critical service server serving the user client.

Figure 11 is a flow chart of a method according to an example.

The method may be performed by an apparatus.

The apparatus may comprise at the least processor and at least one memory. The at least one memory may store computer program code.

The apparatus may be as shown in Figure 5.

The apparatus may be in a visited mission critical service server.

The apparatus may be a visited mission critical service server.

The method may comprise receiving at a visited mission critical service server serving a user client, user profile information for that user client, said user profile information comprising information identifying a primary mission critical service server configured to store a user profile of the user client.

It should be understood that the apparatuses may comprise or be coupled to other units or modules etc. Although the apparatuses have been described as one entity, different modules and memory may be implemented in one or more physical or logical entities.

It is noted that whilst some embodiments have been described in relation to 3GPP networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims.

## Claims

1. A primary mission critical service server configured to:
store, in a user profile of a user client stored in the primary mission critical service server, information about a visited mission critical service server serving the user client, said information comprising identity information for the visited mission critical service server serving the user client;
store, in the user profile, information about a migration status of the user client, said migration status indicating if the user client has migrated from the primary mission critical service server to the visited mission critical service server; and
in response to a change in the user profile, send a first message to the visited mission critical service server when the migration status indicates that the user client has migrated from the primary mission critical service server to the visited mission critical service server, wherein the first message comprises information about the change in the user profile during the migration.

2. The primary server according to claim 1, wherein the first message comprises a notify message, said notify message being sent to the visited mission critical service server when the visited mission critical service server has subscribed to receive changes in the user profile.

3. The primary server according to claims 1 or 2, further configured to, before storing information about the visited mission critical service server serving the user client:
receive from the visited mission critical service server information for updating the user profile, and
update the user profile stored in the primary mission critical service server.

4. The primary server according to claim 3, further configured to, before receiving information for updating the user profile:
receive from the visited mission critical service server a message indicating that there is a change in the user profile; and
send a message to the visited mission critical service server requesting information relating to the change in the user profile.

5. The primary server according to any one of claims 1 to 4, further configured to subscribe to receive changes in the user profile from the visited mission critical service server.

6. A visited mission critical service server configured to:
whilst serving a user client, receive from a primary mission critical service server according to any of the preceding claims:
user profile information for the user client, and
a first message comprises information about a change in the user profile during the migration to the visited mission critical service server, and
send a response to the first message requesting information relating to the change in the user profile during the migration.

7. The visited server according to claim 6 further configured to subscribe to receive changes in the user profile from the primary mission critical service server.

8. A system comprising:
a primary mission critical service server according to any of claims 1 to 5; and
a plurality of mission critical service servers configured to be deployed at a plurality of locations, at least one of said plurality of mission critical service servers acting as a visited mission critical service server according to any of claims 6 and 7 to serve the user client.

## Patentansprüche

1. Primärer missionskritischer Dienstserver, der zu Folgendem ausgelegt ist:
Speichern von Informationen über einen besuchten missionskritischen Dienstserver, der einen Benutzerclient bedient, in einem Benutzerprofil des Benutzerclients, das im primären missionskritischen Dienstserver gespeichert ist, wobei die Informationen Identitätsinformationen für den besuchten missionskritischen Dienstserver umfassen, der den Benutzerclient bedient;
Speichern von Informationen über einen Migrationsstatus des Benutzerclients im Benutzerprofil, wobei der Migrationsstatus anzeigt, ob der Benutzerclient vom primären missionskritischen Dienstserver zum besuchten missionskritischen Dienstserver migriert ist; und
Senden einer ersten Nachricht an den besuchten missionskritischen Dienstserver in Reaktion auf eine Änderung des Benutzerprofils, wenn der Migrationsstatus anzeigt, dass der Benutzerclient vom primären missionskritischen Dienstserver zum besuchten missionskritischen Dienstserver migriert ist, wobei die erste Nachricht Informationen über die Änderung im Benutzerprofil während der Migration umfasst.

2. Primärer Server nach Anspruch 1, wobei die erste Nachricht eine Benachrichtigungsnachricht umfasst, wobei die Benachrichtigungsnachricht an den besuchten missionskritischen Dienstserver gesendet wird, wenn der besuchte missionskritische Dienstserver das Empfangen von Änderungen im Benutzerprofil abonniert hat.

3. Primärer Server nach Anspruch 1 oder 2, der, bevor Informationen über den besuchten missionskritischen Dienstserver, der den Benutzerclient bedient, gespeichert werden, ferner zu Folgendem ausgelegt ist:
Empfangen von Informationen zum Aktualisieren des Benutzerprofils vom besuchten missionskritischen Dienstserver, und
Aktualisieren des im primären missionskritischen Dienstserver gespeicherten Benutzerprofils.

4. Primärer Server nach Anspruch 3, der, bevor Informationen zum Aktualisieren des Benutzerprofils empfangen werden, zu Folgendem ausgelegt ist:
Empfangen einer Nachricht, die anzeigt, dass es eine Änderung im Benutzerprofil gibt, vom besuchten missionskritischen Dienstserver, und
Senden einer Nachricht an den besuchten missionskritischen Dienstserver, die Informationen anfordert, die sich auf die Änderung im Benutzerprofil beziehen.

5. Primärer Server nach einem der Ansprüche 1 bis 4, der ferner dazu ausgelegt ist, den Empfang von Änderungen im Benutzerprofil vom besuchten missionskritischen Dienstserver zu abonnieren.

6. Besuchter missionskritischer Dienstserver, der zu Folgendem ausgelegt ist:
Empfangen von Folgendem von einem primären missionskritischen Dienstserver nach einem der vorhergehenden Ansprüche, während ein Benutzerclient bedient wird:
Benutzerprofilinformationen für den Benutzerclient, und
einer ersten Nachricht, die Informationen über eine Änderung im Benutzerprofil während der Migration zum besuchten missionskritischen Dienstserver umfasst, und
Senden einer Antwort auf die erste Nachricht, die Informationen anfordert, die sich auf die Änderung im Benutzerprofil während der Migration beziehen.

7. Besuchter Server nach Anspruch 6, der ferner dazu ausgelegt ist, den Empfang von Änderungen im Benutzerprofil vom primären missionskritischen Dienstserver zu abonnieren.

8. System, das Folgendes umfasst:
einen primären missionskritischen Dienstserver nach einem der Ansprüche 1 bis 5; und
eine Vielzahl von missionskritischen Dienstservern, die dazu ausgelegt sind, an einer Vielzahl von Standorten eingesetzt zu werden, wobei mindestens einer der Vielzahl von missionskritischen Dienstservern als ein besuchter missionskritischer Dienstserver nach einem der Ansprüche 6 und 7 zum Bedienen des Benutzerclients fungiert.

## Revendications

1. Serveur de service essentiel de mission primaire configuré pour :
dans un profil d'utilisateur d'un client utilisateur stocké dans le serveur de service essentiel de mission primaire, stocker des informations sur un serveur de service essentiel de mission visité desservant le client utilisateur, lesdites informations comprenant des informations d'identité pour le serveur de service essentiel de mission visité desservant le client utilisateur ;
dans le profil d'utilisateur, stocker des informations sur un statut de migration du client utilisateur, ledit statut de migration indiquant si le client utilisateur a migré du serveur de service essentiel de mission primaire vers le serveur de service essentiel de mission visité ; et
en réponse à une modification du profil d'utilisateur, envoyer un premier message au serveur de service essentiel de mission visité lorsque l'état de migration indique que le client utilisateur a migré du serveur de service essentiel de mission primaire vers le serveur de service essentiel de mission visité, dans lequel le premier message comprend des informations sur la modification du profil d'utilisateur au cours de la migration.

2. Serveur primaire selon la revendication 1,
dans lequel le premier message comprend
un message de notification, ledit message de notification étant envoyé au serveur de service essentiel de mission visité lorsque le serveur de service essentiel de mission visité s'est abonné pour recevoir les modifications du profil d'utilisateur.

3. Serveur primaire selon les revendications 1 ou 2, configuré en outre pour, avant de stocker les informations sur le serveur de service essentiel de mission visité desservant le client utilisateur :
recevoir du serveur de service essentiel de mission visité des informations pour mettre à jour le profil d'utilisateur, et
mettre à jour le profil d'utilisateur stocké dans le serveur de service essentiel de mission primaire.

4. Serveur primaire selon la revendication 3, configuré en outre pour, avant de recevoir les informations pour mettre à jour le profil d'utilisateur :
recevoir du serveur de service essentiel de mission visité un message indiquant qu'il y a une modification du profil d'utilisateur ; et
envoyer un message au serveur de service essentiel de mission visité demandant des informations relatives à la modification du profil d'utilisateur.

5. Serveur primaire selon l'une des revendications 1 à 4, configuré en outre pour s'abonner pour recevoir les modifications du profil d'utilisateur du serveur de service essentiel de mission visité.

6. Serveur de service essentiel de mission visité configuré pour :
tout en desservant un client utilisateur, recevoir d'un serveur de service essentiel de mission primaire, selon l'une des revendications précédentes :
des informations de profil d'utilisateur pour le client utilisateur, et
un premier message comprenant des informations sur une modification du profil d'utilisateur au cours de la migration vers le serveur de service essentiel de mission visité, et
envoyer une réponse au premier message demandant des informations relatives à la modification du profil d'utilisateur au cours de la migration.

7. Serveur visité selon la revendication 6, configuré en outre pour s'abonner pour recevoir les modifications du profil d'utilisateur du serveur de service essentiel de mission primaire.

8. Système comprenant :
un serveur de service essentiel de mission primaire selon l'une des revendications 1 à 5 ; et
une pluralité de serveurs de service essentiel de mission configurés pour être déployés sur une pluralité d'emplacements, au moins l'un de ladite pluralité de serveurs de service essentiel de mission agissant en tant que serveur de service essentiel de mission visité selon l'une des revendications 6 et 7 pour desservir le client utilisateur.
